(19) Europäisches Patentamt / European Patent Office / Office européen des brevets

(11) **EP 2 707 989 B1**

(12) **FASCICULE DE BREVET EUROPEEN**

(45) Date de publication et mention
de la délivrance du brevet:
**10.06.2015 Bulletin 2015/24**

(21) Numéro de dépôt: **12717737.6**

(22) Date de dépôt: **30.04.2012**

(51) Int Cl.:
*H04L 9/30* *(2006.01)*       *H04L 9/00* *(2006.01)*

(86) Numéro de dépôt international:
**PCT/EP2012/057879**

(87) Numéro de publication internationale:
**WO 2012/152607 (15.11.2012 Gazette 2012/46)**

(54) **DISPOSITIF ET PROCEDE DE GENERATION DE CLES A SECURITE RENFORCEE POUR ALGORITHME DE CHIFFREMENT PLEINEMENT HOMOMORPHIQUE**

VORRICHTUNG UND VERFAHREN ZUR ERZEUGUNG VON SCHLÜSSELN MIT VERBESSERTER SICHERHEIT FÜR VOLLSTÄNDIG HOMOMORPHEN VERSCHLÜSSELUNGSALGORITHMUS

DEVICE AND METHOD FOR GENERATING KEYS WITH ENHANCED SECURITY FOR FULLY HOMOMORPHIC ENCRYPTION ALGORITHM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **09.05.2011 FR 1153981**

(43) Date de publication de la demande:
**19.03.2014 Bulletin 2014/12**

(73) Titulaire: **Compagnie Industrielle et Financière d'Ingénierie "Ingenico"**
**75015 Paris (FR)**

(72) Inventeurs:
• **NACCACHE, David**
  **F-75018 Paris (FR)**
• **CORON, Jean-Sébastien**
  **F-92500 Rueil Malmaison (FR)**
• **TIBOUCHI, Mehdi**
  **F-75008 Paris (FR)**

(74) Mandataire: **Vidon Brevets & Stratégie**
**16B, rue de Jouanet**
**BP 90333**
**35703 Rennes Cedex 7 (FR)**

(56) Documents cités:
• **MARTEN VAN DIJK ET AL: "Fully Homomorphic Encryption over the Integers", 30 mai 2010 (2010-05-30), ADVANCES IN CRYPTOLOGY Â EUROCRYPT 2010, SPRINGER BERLIN HEIDELBERG, BERLIN, HEIDELBERG, PAGE(S) 24 - 43, XP019142529, ISBN: 978-3-642-13189-9 cité dans la demande le document en entier**
• **CAROLINE FONTAINE ET AL: "A survey of homomorphic encryption for nonspecialists", EURASIP JOURNAL ON INFORMATION SECURITY, vol. 2007, 1 janvier 2007 (2007-01-01), XP055012461, DOI: 10.1155/2007/13801**
• **NAVEED ISLAM ET AL: "A Homomorphic Method for Sharing Secret Images", 24 août 2009 (2009-08-24), DIGITAL WATERMARKING, SPRINGER BERLIN HEIDELBERG, BERLIN, HEIDELBERG, PAGE(S) 121 - 135, XP019126469, ISBN: 978-3-642-03687-3 le document en entier**

## Description

### 1. Domaine de l'invention

Le domaine de l'invention est celui des dispositifs de chiffrement dit pleinement homomorphique.

Plus précisément, l'invention concerne la mise en oeuvre d'opérations et de traitements numériques de génération de clés destinées à un algorithme de chiffrement homomorphique mis en oeuvre dans des microprocesseurs et ce de façon à procurer un niveau de sécurité significativement plus élevé que l'art antérieur.

L'invention concerne tout particulièrement les infrastructures et dispositifs de génération de clés.

### 2. Art antérieur

#### 2.1. Cryptographie à clé publique

Le traitement cryptographique de données numériques nécessite souvent d'effectuer des opérations de chiffrement à clé publique.

Dans un algorithme de chiffrement à clé publique, le chiffreur chiffre un message $m$ à l'aide d'un algorithme de chiffrement $E$ en un chiffré c = $E(PK,m)$, à l'aide d'une clé publique, notée $PK$.

Le destinataire du message, déchiffre le chiffré c en appliquant une fonction de déchiffrement $D$ telle que $m=D(SK,c)$ où $SK$ est une clé secrète liée à la clé publique $PK$.

Les clés publique et secrète (respectivement $PK$ et $SK$) sont générées à l'aide d'un algorithme probabiliste dit algorithme de génération de clés.

Par exemple, des algorithmes de chiffrement à clé publique célèbres sont l'algorithme dit RSA décrit dans le brevet américain U.S. 4,405,829, ou l'échange de clés Diffie-Hellman décrit dans le brevet américain U.S. 4,200,770.

#### 2.1. Cryptographie pleinement homomorphique à clé publique

Il est particulièrement intéressant, pour de nombreuses applications pratiques, de disposer d'un Algorithme Pleinement Homomorphique à Clé Publique (APHCP).

Un APHCP comporte outre les algorithmes $E$ et $D$, deux autres algorithmes notés $ADD$ et $MUL$ ayant, pour tous messages $m[1]$ et $m[2]$, les propriétés suivantes :

• $m[1] \times m[2]=D(SK, MUL(E(PK,m[1]), E(PK,m[2])))$

• $m[1] + m[2]=D(SK, ADD(E(PK,m[1]), E(PK,m[2])))$

Il est possible de montrer que même si les opérations $m[1] + m[2]$ et $m[1] \times m[2]$ s'entendent modulo 2 (à savoir « + » représente l'opération logique de « ou

exclusif » et « $\times$ » représente le « et logique »), on peut coder n'importe quel traitement complexe de données à l'aide de ces deux seules opérations.

Les applications des APHCP sont multiples :

- Des APHCP permettent par exemple d'effectuer des calculs sur les données médicales de patients présents dans une base de données sans pour autant avoir à révéler leur identité.
- Des APHCP permettent de connaître le nombre de voix obtenues par les candidats d'une élection sans que l'on dévoile l'identité des votants.
- Des APHCP permettent la création de protocoles de paiement anonymes.
- Des APHCP permettent la création d'un système de ventes où le montant des enchères resterait inconnu, afin d'éviter que le vendeur cherche la surenchère. Seul le montant le plus important serait dévoilé à la fin de la procédure.

Un premier APHCP a été publié par Craig Gentry dans le document **D1** correspondant à l'article intitulé « Fully Homomorphic Encryption Using Ideal Lattices » paru dans les actes du colloque 41 st ACM Symposium on Theory of Computing (STOC), 2009. Ce procédé souffrant d'une grande complexité de mise en oeuvre, un second procédé d'APHCP, basé sur l'arithmétique sur les entiers fut proposé par Marten van Dijk, Craig Gentry, Shai Halevi, et Vinod Vaikuntanathan (vDGHV) dans le document **D2** correspondant à l'article intitulé « Fully Homomorphic Encryption over the Integers » paru dans les actes du colloque EUROCRYPT'2010 aux pages 24 à 43.

Les documents **D1** et **D2** sont incorporés par référence à la présente description.

#### 2.2. Méthode vDGHV

Dans la méthode vDGHV, le procédé de génération G de clés secrètes et publiques commence par générer un nombre impair $p$ correspondant à une clé secrète $SK,$ appelée clé secrète vDGHV, et une clé publique $PK,$ appelée clé publique vDGHV correspondant à une collection de nombres entiers $x[i] = q[i] \times p + r[i]$ pour $i$ allant de $0$ à $k,$ avec $q[i]$ et $r[i]$ qui sont des nombres aléatoires respectant les contraintes spécifiées dans le document **D2**.

Les nombres $x[i]$ sont tels que $r[i]$ est de faible taille relativement à $x[i]$ (par exemple $r[i]$ est un nombre de 80 ou 100 bits).

L'un des éléments de la clé publique vDGHV, l'élément noté $x[0],$ présente une particularité : pour l'élément $x[0]$, la condition initiale suivante doit être observée : $r[0]=0.$

Afin de chiffrer (via l'algorithme $E$) un bit $m$, l'expéditeur calcule : $c=m+2r+2Z$ où:

• $r$ est un nombre aléatoire de taille à peu près similaire à celle des *r[i]* (la différence pouvant par exemple être d'un bit ou deux) ;

- *Z = x[1] e[1] + ... + x[k] e[k]* où les *e[i]* sont des bits aléatoires (i.e *e[i]* = 0 ou 1 de manière aléatoire).

Afin de déchiffrer (via l'algorithme *D*) un chiffré c, le récepteur calcule : *m = (c mod p) mod 2.*

La mise en oeuvre des opérations *ADD* et *MUL,* utilise la technique dite de « *bootstrapping* » (correspondant à une technique d'inférence statistique), connue de l'homme du métier, et décrite dans le document **D2.**

## 2.3. Mise en oeuvre du procédé de génération *G* de clés vDGHV par un microprocesseur communiquant avec un générateur aléatoire matériel.

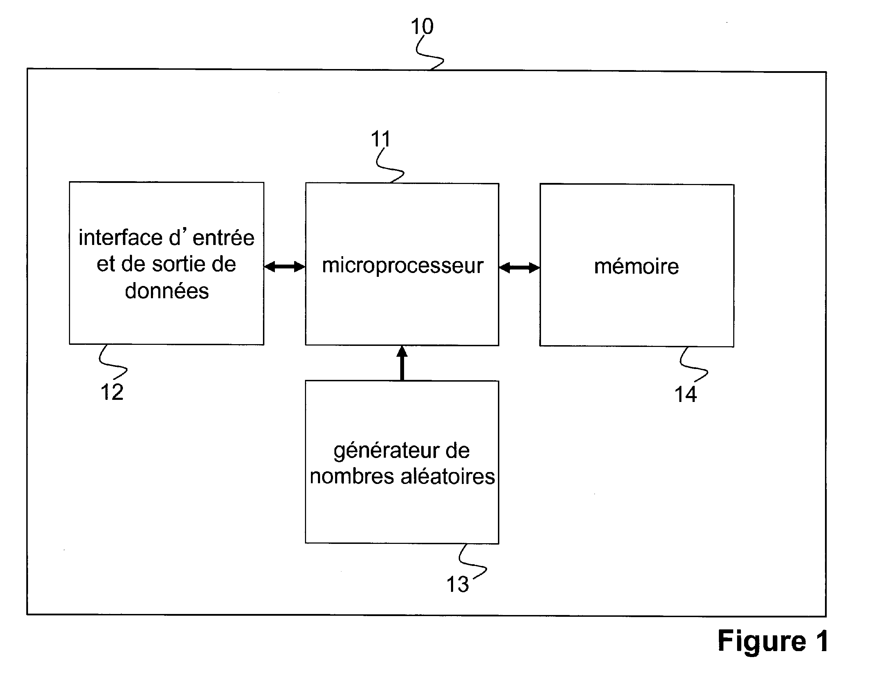

Le procédé de génération de la clé publique vDGHV, dont il a été question précédemment est mis en oeuvre sur un dispositif matériel 10 dont l'architecture matérielle est illustrée par la figure 1.

Un microprocesseur 11 est connecté à un moyen d'interface d'entrée et de sortie de données 12, à un générateur aléatoire 13 et à une mémoire 14 dans laquelle le microprocesseur lit les instructions encodant un programme *Pg* mettant en oeuvre le procédé de génération G de clés vDGHV.

Au démarrage, le microprocesseur 11 commence à lire le programme *Pg* dans la mémoire 14. Lors de son exécution sur le microprocesseur 11, le programme *Pg* génère la clé secrète *SK* correspondant à un nombre impair *p,* et la clé publique PK = *x[0], ...,x[k].*

Une fois les éléments *x[i]* obtenus, le programme *Pg* donne instruction au microprocesseur 11 de communiquer les éléments *x[0], ...,x[k]* via l'interface d'entrée et de sortie de données 12 à destination d'un autre dispositif.

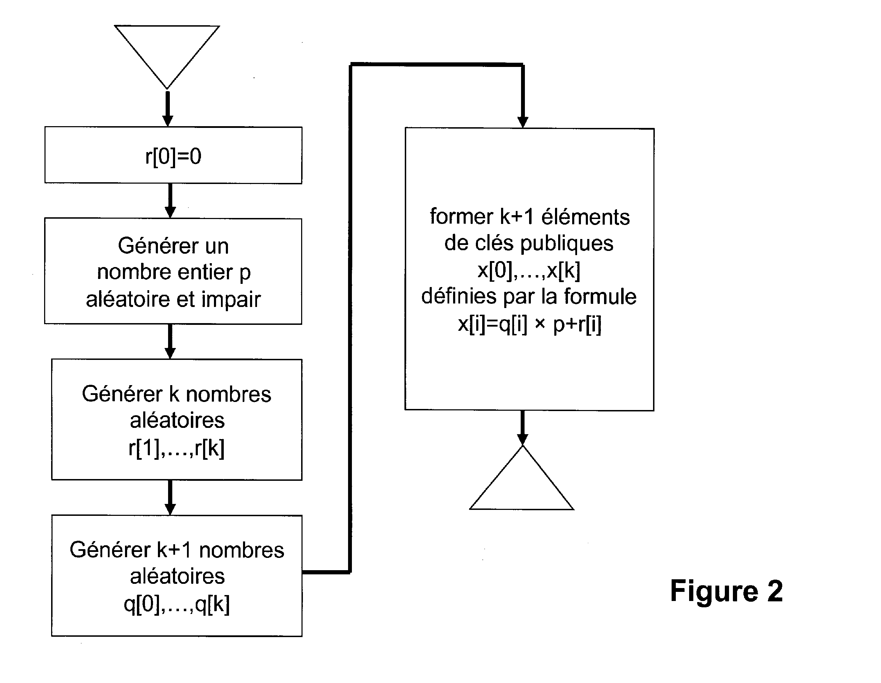

Le procédé de génération G de clés vDGHV, illustré par la figure 2, met en oeuvre les étapes suivantes (dans n'importe quel ordre) :

- Définir *r[0]=0* ;
- Générer un nombre aléatoire impair *p* (correspondant à la clé secrète *SK*) ;
- Générer *k* nombres aléatoires *r[i]* notés *r[1],...,r[k];*
- Générer *k+1* nombres aléatoires *q[i]* notés *q[0], ...,q[k].*

Puis, une étape d'obtention est mise en oeuvre afin de déterminer les éléments *x[i] = q[i] p + r[i]* pour *i* allant de *0* à *k* définissant la clé publique *PK.*

## 2.4. Inconvénients de l'art antérieur.

Le procédé de génération *G* de clés vDGHV mentionné précédemment présente une faille de sécurité.

En effet, dans la mesure où la clé secrète SK correspondant au nombre *p* qui est un nombre impair aléatoire, il est tout à fait possible que ce nombre p puisse s'écrire comme un produit de facteurs premiers :

$$ p \doteq p[1]^{a[1]} \times ... \times p[L]^{a[L]}. $$

Ici, les nombres *p[i]* représentent des nombres premiers et les entiers *a[i]* représentent des puissances, c'est-à-dire le nombre de fois que chaque *p[i]* apparaît dans la clé secrète p.

Il est connu de l'homme du métier que des méthodes permettant de décomposer entièrement ou partiellement *p* en facteurs premiers existent. Par exemple, une première méthode connue sous le nom de factorisation en courbe elliptique de Lenstra permet d'extraire certains facteurs premiers de nombres entiers. Cette première méthode est décrite dans l'article de Lenstra Jr., H. W. "Factoring integers with elliptic curves." publié dans la revue Annals of Mathematics (2) 126 (1987) pages 649 à 673 et incorporé par référence. Une deuxième méthode connue sous le nom d'algorithme de factorisation par crible sur les corps de nombres généralisé permet aussi d'obtenir une telle décomposition.

En appliquant une telle méthode de factorisation à la clé publique *x[0] = p × q[0] = q[0] × p[1]^{x[1]} × ... × p[L]^{α[L]},* un éventuel attaquant pourrait découvrir au moins un facteur *p[j]* entrant dans la composition de *p.*

L'attaquant peut ensuite calculer la quantité *t=x[1] mod p[j].* En effet, *t = x[1] mod p[j] = r[1] mod p[j].*

A partir de là, deux cas de figure peuvent se présenter :

1. Si *p[j] > r[1],* alors t = r[1], et la clé secrète peut être déterminée directement en calculant *p = PGCD(x[0],x[1]-t).*
2. *Si p[j] < r[1],* alors l'attaquant détermine la valeur *t= r[1] mod p[j],* ce qui lui permet de rechercher exhaustivement la valeur de *r[1]* plus rapidement. Dans ce cas, l'attaquant tentera de calculer la quantité *PGCD(x[0],x[1]-t-p[j]×i)* pour différentes valeurs de *i* jusqu'à ce que pour une certaine valeur de *i* l'opération *PGCD(x[0],x[1]-t-p[j]×i)* révèle la clé secrète *SK* correspondant au nombre impair aléatoire *p.*

Ainsi, il n'était pas évident pour l'homme du métier de détecter et de formuler ce problème de sécurité inhérent à l'utilisation du procédé de génération *G* de clés vDGHV. L'invention est donc au moins en partie une invention de problème, correspondant à la détection de cette faille de sécurité.

## 3. Objectifs de l'invention

L'invention a pour objectif général de pallier à au moins certains inconvénients de la technique connue de vDGHV.

Plus précisément, un premier objectif de l'invention est de fournir une technique permettant de générer des clés secrètes et publiques résistantes pour la méthode d'APHCP de vDGHV décrite précédemment.

Un autre objectif d'au moins un mode de réalisation de l'invention est de fournir une technique permettant d'augmenter le niveau de sécurité des clés utilisées pour le chiffrement et le déchiffrement.

## 4. Exposé de l'invention

Il est proposé un procédé de génération de clés secrètes et publiques vDGHV à sécurité renforcée, mis en oeuvre dans un dispositif comprenant au moins un microprocesseur et une mémoire, caractérisé en ce qu'il comprend une étape de génération d'une clé secrète $SK$ correspondant à la génération d'un nombre aléatoire $p$ difficile ou impossible à factoriser.

Un tel procédé assure, selon un premier mode de réalisation, la génération de clés renforcée à l'aide de l'algorithme de chiffrement pleinement homomorphique à clé publique publié dans le document **D2,** modifié de sorte à comporter les étapes suivantes :

    (a) Définir $r[0]=0$ ;
    (b) Générer un nombre premier aléatoire $p$, qui est par définition impossible à factoriser ;
    (c) Générer $k$ nombres aléatoires $r[i]$ notés $r[1],...,r[k]$ ;
    (d) Générer $k+1$ nombres aléatoires $q[i]$ notés $q[0],..., q[k]$ ;
    (e) Former les éléments de la clé publique $x[i] = q[i] p + r[i]$ pour $i$ allant de $0$ à $k$ ;
    (f) Retourner la clé publique $\{x[0], ...,x[k]\}$ et la clé secrète $p$.

Ainsi, ce procédé permet un accroissement de sécurité du fait de l'impossibilité calculatoire accrue pour retrouver la valeur de $p$.

Dans une variante, il est proposé un procédé de génération de clés renforcée pour l'algorithme de chiffrement pleinement homomorphique à clé publique publié dans le document **D2,** modifié de sorte à comporter les étapes suivantes :

    (a) Définir $r[0]=0$ ;
    (b) Générer un nombre aléatoire $p$ difficile à factoriser ;
    (c) Générer $k$ nombres aléatoires $r[i]$ notés $r[1], ...,r[k]$ ;
    (d) Générer $k+1$ nombres aléatoires $q[i]$ notés $q[0], ...,q[k]$ ;
    (e) Former les éléments de la clé publique $x[i] = q[i] p + r[i]$ pour $i$ allant de $0$ à $k$;
    (f) Retourner la clé publique $\{x[0], ...,x[k]\}$ et la clé secrète $p$.

Un nombre aléatoire $p$ difficile à factoriser est un nombre dont la taille et la composition est choisie de sorte que l'opération de factorisation (qui a une complexité exponentielle en termes de temps de calculs et de ressources mémoire) soit irréalisable par un attaquant.

Dans un autre mode de réalisation, il est proposé un dispositif de calcul comportant un microprocesseur connecté à un moyen d'interface d'entrée et de sortie de données, à un générateur aléatoire et à une mémoire de laquelle ledit microprocesseur lit les instructions encodant un programme inventif de génération de clés fonctionnant selon l'un quelconque des procédés décrits précédemment.

## 5. Liste des figures

Le dispositif matériel de génération de clés du procédé vDGHV de l'art antérieur est décrit dans la figure 1.

Les étapes principales du procédé de génération $G$ de clés vDGHV sont décrites dans la figure 2.

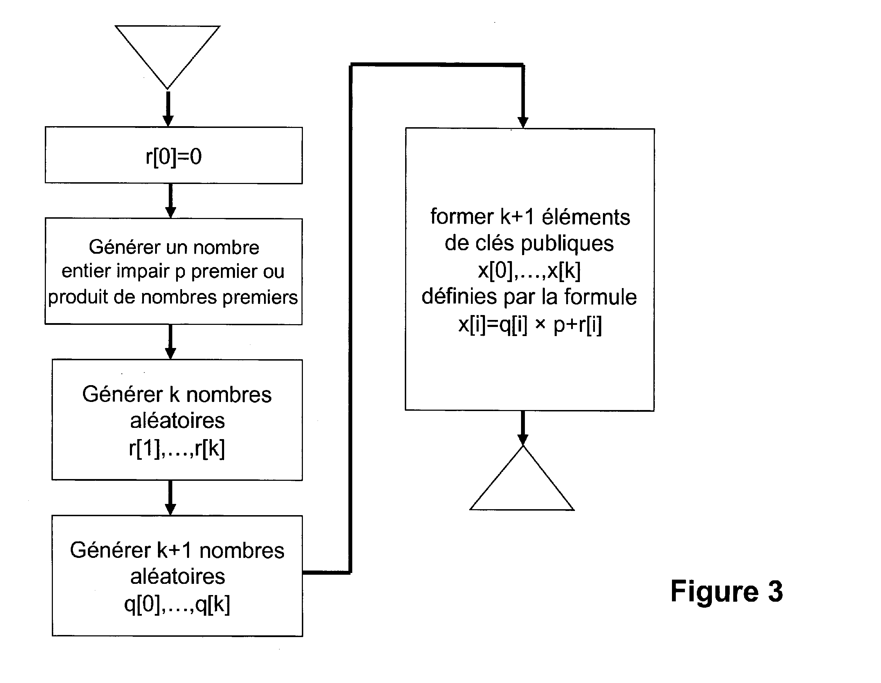

La figure 3 présente des étapes d'un procédé de génération $G'$ de clés, selon un mode de réalisation de l'invention.

## 6. Description de l'invention

La génération inventive des éléments $x[i]$ de la clé publique $PK$ à sécurité renforcée pour un algorithme de type vDGHV sur une architecture matérielle est effectuée de la manière suivante.

L'architecture matérielle du dispositif selon l'invention (non représenté) reprend les éléments de l'architecture matérielle du dispositif 10 de l'art antérieur décrit dans la figure 1, à savoir un microprocesseur 11 connecté à un moyen d'interface d'entrée et de sortie de données 12, à un générateur aléatoire 13 et à une mémoire 14 de laquelle le microprocesseur 11 lit les instructions encodant mettant en oeuvre le procédé de génération $G'$ de clés selon un mode de réalisation de l'invention.

Le procédé de génération $G'$ de clés diffère du procédé de génération $G$ de clés décrit précédemment par l'étape de génération de la clé secrète.

Au démarrage, le microprocesseur 11 génère la clé secrète $p$ selon un mode de réalisation de l'invention, et les éléments correspondants $x[0],...,x[k]$ de la clé publique.

Une fois les éléments $x[i]$ générés, le dispositif selon l'invention transmet les éléments $x[0],...,x[k]$ à destination d'un autre dispositif via l'interface d'entrée et de sortie de données 12.

La figure 3 présente des étapes d'un procédé de génération $G'$ de clés, selon un mode de réalisation de l'invention :

•   Définir $r[0] = 0$ ;
•   Générer un nombre aléatoire $p$ difficile ou impossible à factoriser ;
•   Générer $k$ nombres aléatoires $r[i]$ notés $r[1],...,r[k]$ ;

- Générer *k+1* nombres aléatoires *q[i]* notés *q[0],...,q[k]*.

Remarquons que ces étapes peuvent être réalisées dans n'importe quel ordre.

Puis, une étape d'obtention est mise en oeuvre afin de déterminer les éléments *x[i] = q[i] p + r[i]* pour *i* allant de *0* à *k* définissant la clé publique *PK*.

Selon un premier mode de réalisation, la clé secrète *SK* correspondant au nombre *p* est un nombre premier secret. Le mode de génération de tels nombres premiers secrets *p* est connu de l'homme du métier et est, par exemple utilisé afin de générer des clés secrètes pour l'algorithme RSA.

Selon un second mode de réalisation, la clé secrète *SK* correspondant au nombre *p* est un produit de nombres premiers qui est tel que le produit est difficile à factoriser. Le mode de génération de tels nombres p est connu de l'homme du métier et est, par exemple utilisé afin de générer des clés publiques pour l'algorithme RSA.

Dans les deux cas, les tailles des paramètres *p*, *q[i]* et *r[i]* suivent les mêmes recommandations que celles décrites dans le document **D2**.

Par ailleurs, l'une quelconque des variantes du procédé selon l'invention, décrites précédemment, peut également être implémentée sous forme de matériel dans un composant programmable de type FPGA (« Field Programmable Gate Array » en anglais) ou de type ASIC (« Application-Specific Integrated Circuit » en anglais).

## Revendications

1. Procédé de génération de clés secrètes et publiques obtenues au moyen d'un algorithme pleinement homomorphique à clé publique basé sur l'arithmétique sur les entiers, appelée clés secrète et clés publique vDGHV, à sécurité renforcée, mis en oeuvre dans un dispositif comprenant au moins un microprocesseur (11) et une mémoire (14), **caractérisé en ce qu'**il comprend une étape de génération d'une clé secrète *SK* correspondant à un nombre aléatoire *p* premier ou produit de nombres premiers dont la taille et la composition est choisie de sorte que l'opération de factorisation dudit nombre aléatoire *p* soit irréalisable par un attaquant.

2. Procédé de génération de clés selon la revendication 1 **caractérisé en ce qu'**il comprend les étapes suivantes :

   (a) définir *r[0]=0* ;
   (b) générer ladite clé secrète *SK* correspondant audit nombre aléatoire *p*;
   (c) générer *k* nombres aléatoires *r[i]* notés *r[1],...,r[k]* ;
   (d) générer *k+1* nombres aléatoires *q[i]* notés *q[0],...,q[k]* ;
   (e) former des éléments *x[i] = q[i] p + r[i]* pour *i* allant de *0* à *k,* définissant une clé publique *PK;*
   (f) retourner ladite clé publique *PK = {x[0],...,x[k]}* et la clé secrète *SK = p.*

3. Dispositif comprenant au moins un microprocesseur (11) connecté à un moyen d'interface d'entrée et de sortie de données (12), à un générateur aléatoire (13) de clés secrètes et publiques obtenues au moyen d'un algorithme pleinement homomorphique à clé publique basé sur l'arithmétique sur les entiers, appelée clés secrète et clés publique vDGHV, à sécurité renforcée, et à une mémoire (14) dans laquelle ledit microprocesseur met en oeuvre des moyens de génération d'une clé secrète *SK* correspondant à un nombre aléatoire *p* premier ou produit de nombres premiers dont la taille et la composition est choisie de sorte que l'opération de factorisation dudit nombre aléatoire *p* soit irréalisable par un attaquant.

4. Dispositif selon la revendication 3 **caractérisé en ce que** ledit microprocesseur (11) met en oeuvre des moyens de génération d'une clé secrète *SK* correspondant à un nombre premier aléatoire *p*.

5. Produit programme d'ordinateur, comprenant des instructions de code de programme pour la mise en oeuvre du procédé selon au moins une des revendications 1 à 2 lorsque ledit programme est exécuté sur un ordinateur.

6. Médium de stockage lisible par ordinateur et non transitoire, stockant un programme d'ordinateur comprenant un jeu d'instructions exécutables par un ordinateur ou un processeur pour mettre en oeuvre le procédé selon au moins une des revendications 1 à 2.

## Patentansprüche

1. Verfahren zur Erzeugung geheimer und öffentlicher Schlüssel, die mittels eines vollständig homomorphen Algorithmus mit öffentlichem Schlüssel auf der Grundlage der Ganzzahlarithmetik erhalten werden, die geheimer und öffentlicher vDGHV-Schlüssel genannt werden, mit verbesserter Sicherheit, das in einer Vorrichtung ausgeführt wird, die mindestens einen Mikroprozessor (11) und einen Speicher (14) umfasst, **dadurch gekennzeichnet, dass** es einen Schritt zum Erzeugen eines geheimen Schlüssels SK umfasst, der einer Zufallsprimzahl p oder dem Produkt von Primzahlen entspricht, dessen Größe und Zusammensetzung derart gewählt wird, dass die Faktorisierungsoperation der Zufallszahl p durch einen Angreifer nicht ausführbar ist.

**2.** Verfahren zur Erzeugung von Schlüsseln nach Anspruch 1, **dadurch gekennzeichnet, dass** es die folgenden Schritte umfasst:

a) Definieren von r[0]=0;
b) Erzeugen des geheimen Schlüssels SK, der der Zufallszahl p entspricht;
c) Erzeugen von k Zufallszahlen r[i], die als r[1], ..., r[k] geschrieben werden;
d) Erzeugen von k+1 Zufallszahlen q[i], die als q[0],..., q[k] geschrieben werden;
e) Bilden der Elemente x[1] = q[i]p + r[i] für i von 0 bis k, wodurch ein öffentlicher Schlüssel PK definiert wird;
f) Ausgeben des öffentlichen Schlüssels PK = {x[0], ..., x[k]} und des geheimen Schlüssels SK = p.

**3.** Vorrichtung, die mindestens einen Mikroprozessor (11) umfasst, der mit einem Schnittstellenmittel zur Eingabe und Ausgabe von Daten (12), mit einem Zufallsgenerator (13) für geheime und öffentliche Schlüssel, die mittels eines vollständig homomorphen Algorithmus mit öffentlichem Schlüssel auf der Grund-lage der Ganzzahlarithmetik erhalten werden, die geheimer und öffentlicher vDGHV-Schlüssel genannt werden, mit verbesserter Sicherheit, und mit einem Speicher (14) verbunden ist, in dem der Mikroprozessor Mittel zur Erzeugung eines geheimen Schlüssels SK ausführt, der einer Zufallsprimzahl p oder dem Produkt von Primzahlen entspricht, deren Größe und Zusammensetzung derart gewählt ist, dass die Faktorisierungsoperation der Zufallszahl p durch einen Angreifer nicht ausführbar ist.

**4.** Vorrichtung nach Anspruch 3, **dadurch gekennzeichnet, dass** der Mikroprozessor (11) die Mittel zur Erzeugung eines geheimen Schlüssels SK, der einer ersten Zufallsprimzahl p entspricht, ausführt.

**5.** Computerprogrammprodukt, das Programmcodebefehle für die Ausführung des Verfahrens nach mindestens einem der Ansprüche 1 bis 2 umfasst, wenn das Programm auf einem Rechner ausgeführt wird.

**6.** Maschinenlesbares und nichtflüchtiges Speichermedium, das ein Computerprogramm speichert, das eine Menge von Befehlen umfasst, die durch einen Rechner oder einen Prozessor ausgeführt werden können, um das Verfahren nach mindestens einem der Ansprüche 1 bis 2 durchzuführen.

**Claims**

**1.** Method for generating secret and public keys, obtained by means of a fully homomorphic public-key encryption algorithm based on arithmetic over the integers, called vDGHV secret keys and public keys, with enhanced security, implemented in a device comprising at least one microprocessor (11) and a memory (14), **characterized in that** it comprises a step for generating a secret key *SK* corresponding to a random prime number *p*, or product of prime numbers, whose size and composition is chosen so that the factoring operation of said random number *p* is unrealizable by an attacker.

**2.** Method for generating keys according to claim 1 **characterized in that** it comprises the following steps:

(a) defining *r[0]=0;*
(b) generating said secret key *SK* corresponding to said random number *p*;
(c) generating *k* random numbers *r[i]* denoted as *r[1],...,r[k]*;
(d) generating *k+1* random numbers *q[i]* denoted as *q[0],...,q[k]*;
(e) forming said elements of the public key *x[i]* = *q[i] p + r[i]* for *i* ranging from 0 to *k*;
(f) returning said public key *PK = {x[0],...,x[k]}* and the secret key *SK = p*.

**3.** Device comprising at least one microprocessor (11) connected to a data input and output interface means (12), a random generator (13) of secret and public keys, obtained by means of a fully homomorphic public-key encryption algorithm based on arithmetic over the integers called vDGHV secret keys and public keys, with enhanced security, and a memory (14) in which said microprocessor implements means for generating a secret key *SK* corresponding to a random prime number *p*, or product of prime numbers, of large size, whose size and composition is chosen so that the factoring operation of said random number *p* is unrealizable by an attacker.

**4.** Device according to claim 3 **characterized in that** said microprocessor (11) implements means for generating a secret key *SK* corresponding to a random prime number *p*.

**5.** Computer program product comprising program code instructions for implementing the method according to at least one of the claims 1 to 2, when said program is executed on a computer.

**6.** Computer-readable and non-transitory storage medium comprising a set of instructions executable by a computer or a processor to implement the method according to any one of the claims 1 to 2.

EP 2 707 989 B1

interface d'entrée et de sortie de données

microprocesseur

mémoire

générateur de nombres aléatoires

**Figure 1**

```
        ▽
        │
        ▼
┌─────────────────┐
│     r[0]=0      │
└─────────────────┘
        │
        ▼
┌─────────────────┐          ┌──────────────────────┐
│   Générer un    │          │  former k+1 éléments │
│  nombre entier p│          │   de clés publiques  │
│ aléatoire et    │          │      x[0],…,x[k]     │
│    impair       │          │ définies par la      │
└─────────────────┘          │      formule         │
        │                    │   x[i]=q[i] × p+r[i]  │
        ▼                    └──────────────────────┘
┌─────────────────┐                      │
│ Générer k nombres│                     ▼
│   aléatoires    │                      △
│    r[1],…,r[k]  │
└─────────────────┘
        │
        ▼
┌─────────────────┐
│ Générer k+1     │
│    nombres      │
│   aléatoires    │
│   q[0],…,q[k]   │
└─────────────────┘
```

**Figure 2**

r[0]=0

Générer un nombre entier impair p premier ou produit de nombres premiers

Générer k nombres aléatoires r[1],...,r[k]

Générer k+1 nombres aléatoires q[0],...,q[k]

former k+1 éléments de clés publiques x[0],...,x[k] définies par la formule $x[i]=q[i] \times p+r[i]$

**Figure 3**

EP 2 707 989 B1

## RÉFÉRENCES CITÉES DANS LA DESCRIPTION

**Documents brevets cités dans la description**

- US 4405829 A

- US 4200770 A

**Littérature non-brevet citée dans la description**

- Fully Homomorphic Encryption Using Ideal Lattices. *41 st ACM Symposium on Theory of Computing (STOC),* 2009
- Fully Homomorphic Encryption over the Integers. *EUROCRYPT,* 2010, 24-43

- Factoring integers with elliptic curves. **LENSTRA JR., H. W.** Annals of Mathematics. 1987, vol. 126, 649-673